# EUROPEAN PATENT APPLICATION

(11) **EP 4 557 555 A1**
(43) Date of publication of application: **21.05.2025**
(21) Application number: 23210930.6
(22) Date of filing: 20.11.2023
(51) Int. Cl.: H02J 3/24, H02J 3/38

(54) **FREQUENCY SUPPORT FUNCTIONS OF ELECTROLYSIS SYSTEMS**

(71) Applicant: Siemens Energy Global GmbH & Co. KG, 81739 München (DE)
(72) Inventor: Loku, Fisnik, 90768 Fürth (DE); Craciun, Bogdan, 18069 Rostock (DE); Langenberg, Nils, 90461 Nürnberg (DE)

(57) **Abstract**

The invention relates to a method for frequency support by an electrolysis system (1) in an electrical network (2), the electrolysis system (1) comprising a control system (3) with an outer loop controller (4) and an inner loop controller (5), a sampling time of the inner loop controller (5) being shorter than a sampling time of the outer loop controller (6) wherein a rate of change of frequency (RoCoF) in the electrical network (2) is constantly being monitored by the inner loop controller (5) and if the RoCoF is exceeding or falling below specified limits, a reference DC current value of the electrolysis system (1) that is obtained from the outer loop controller (4) with specified ramp up/down rates, is being redefined as a function of the RoCoF and a specified droop control (6). The invention further is about an electrolysis system (1) with a frequency support function for an electrical network (2) supplying the electrolysis system (1).

## Description

### TECHNICAL FIELD

The invention is about a method for frequency support by an electrolysis system in an electrical network and a corresponding electrolysis system with a frequency support function for an electrical network.

### BACKGROUND

The number of installed electrolysis systems in the existing transmission networks continuously increases. To accelerate the green hydrogen production, the electrolysis system capacity for the planned projects achieves the GW range. Considering this, the transmission system operators (TSOs) are beginning to define requirements for the connection of such large electrolysis systems in existing networks. Some of the basic requirements that are being defined are the fault-ride-through (FRT) requirements, which define the operation areas when an electrolysis system needs to stay connected at a corresponding adjacent AC network and operation areas where the electrolysis systems are allowed to disconnect from the network.

Additionally, initial specifications and requirements, such as the rate-of-change-of-frequency (RoCoF) withstand capability are being defined as well. Several proposals from ENTSO-E (European Network of Transmission System Operators for Electricity, a European association in which all transmission system operators in Europe are mandatory members) regarding the RoCoF and the frequency range, where the continuous operation of generating units is mandatory are being applied by different grid code requirements [Source: Rate of Change of Frequency (RoCoF) withstand capability - ENTSO-E guidance document for national implementation for network codes on grid connection].

Since conventional power plants are gradually replaced by renewable energy sources, the inertia in the system decreases due to the reduction of the existing rotation masses in the system. This leads to a higher vulnerable system to disturbance which will lead to disturbance in frequency. Major system disturbances generally require appropriate frequency control, as otherwise they may lead to worse scenarios, such as network instabilities and power outages. In this case, the different network units, such as the generating units have limited time to react to provide network frequency supporting actions. Furthermore, with the planned installation of the electrolysis systems in GW range, the requirements for the connection of the electrolysis systems to an adjacent network is expected to grow, since a mere RoCoF withstand capability may not be sufficient to guarantee a stable network operation. Frequency supporting functions, such as the primary frequency control, are expected to be a requirement for load systems, such as the electrolysis systems as well.

Currently, no solution to the problem described above exists. Load systems like electrolyzers are considered as not being able to provide any supporting functionality to the adjacent network.

One measure that might be considered for electrolysis plants would be to change the active power reference value of the higher-level controllers, such that when the frequency of the network decreases, the reference power of the electrolysis system is decreased as well to support the network frequency and increase the active power if the network frequency increases as well. However, it should be noted that the increase in power is currently limited to the maximum power consumption of the electrolysis plants specified by the manufacturers.

This approach may work for situations where the change in the network frequency lasts for longer than 50ms, as 50ms is the minimum sampling time with which the current outer controllers of the rectifiers work. This may be critical for sudden frequency changes which last for shorter periods than 50ms, as the system may become unstable even before it is detected by the corresponding outer control loops.

### SUMMARY OF INVENTION

The object of the invention is to provide a frequency supporting method for an electrolysis system in a transmission network and an electrolysis system with a frequency support function.

This may be achieved with a frequency supporting method according to claim 1 and an electrolysis system according to claim 4. The dependent claims describe advantageous developments and modifications of the invention.

According to the invention the frequency supporting method for an electrolysis system in an electrical network, the electrolysis system comprising a control system with an outer loop controller and an inner loop controller, a sampling time of the inner loop controller being shorter than a sampling time of the outer loop controller, is characterized in that a rate of change of frequency (RoCoF) in the electrical network is constantly being monitored by the inner loop controller and if the RoCoF is exceeding or falling below specified limits, a reference DC current value of the electrolysis system that is obtained from the outer loop controller with specified ramp up/down rates, is being redefined as a function of the RoCoF and a specified droop control.

In control engineering and system theory, terms like "inner" and "outer" control loops are often used to describe different levels of control loops within a system. These terms refer to the hierarchy of control loops and their respective roles in controlling the system.

Inner control loops (also referred to as lower control loops) are control loops that are directly connected to the actual process or system and deal with the rapid and precise compensation of disturbances. They typically operate at a higher sampling rate and respond to changes within the system. Examples of lower control loops include the control of motor speed, voltage, or current in an electrical system.

Outer control loops (also referred to as upper control loops) are control loops that provide a higher level of control and focus on the overall performance and stability of the system. They typically use information from the inner control loops to optimize system performance and respond to external disturbances or demands. Outer control loops often operate at a lower sampling rate than inner control loops and are more focused on long-term adjustments and optimizations.

Droop control is a control strategy to maintain a system frequency (and power balance) by adjusting the input or output power based on a frequency deviation from the nominal value. "The term "droop" refers to the intentional drop or increase in the generated power from corresponding power generation units in case of frequency (or voltage) increase or decrease in the network, respectively." Or, in terms of a power consumption unit, if the grid frequency increases, the power consumption should also increase and vice versa. This droop characteristic is linear and is defined by the droop coefficient, which determines the relationship between the frequency or voltage deviation and the change in output power.

It is advantageous, when the inner loop controller is a DC current controller. In an electrolysis plant, the inner loop controller is responsible for maintaining the desired operating conditions of the system. Using a DC current controller as the inner loop controller in an electrolysis plant therefore offers several advantages. A DC current controller helps ensure that the electrolysis process remains stable by maintaining a constant current supply. This is crucial for achieving consistent and efficient electrolysis reactions. A DC current controller can accurately control the current flowing through the electrolysis cell, ensuring precise control of the reaction rate and product formation. This is particularly important in industrial electrolysis plants, where product quality and process efficiency are of utmost importance. And using a DC current controller simplifies the overall control scheme for the electrolysis plant. By focusing on current control, plant operators can more easily monitor and adjust the system's performance as needed.

It is advantageous when a sampling time of the inner loop controller is below 300 µs. This offers advantages in terms of response time, stability, control precision, disturbance rejection, and robustness. These benefits contribute to better overall performance, efficiency, and reliability of the electrolysis process.

The electrolysis system according to the invention with a frequency support function for an electrical network supplying the electrolysis system is characterized by comprising a control system with an outer loop controller and an inner loop controller, a sampling time of the inner loop controller being shorter than a sampling time of the outer loop controller, the inner loop controller being adapted to constantly monitoring a rate of change of frequency (RoCoF) in the electrical network and if the RoCoF is exceeding or falling below specified limits, to obtain a reference DC current value of the electrolysis system from the outer loop controller with specified ramp up/down rates, and to redefine the reference DC current as a function of the RoCoF and a specified droop control.

The lower control loop of a rectifier controls usually has a sampling time that is short enough to detect sudden frequency changes that would otherwise not be detected by the slower outer control loops. According to the invention a sudden frequency change df/dt overrides the reference value of the DC current as provided by the corresponding outer loop controls with a reference DC current estimated by a droop control, which can be defined and implemented to have a direct relation of the network frequency and the DC current reference.

In summary, it can be concluded that with the present invention, grid supporting functions and ensuring compliance with different grid code requirements regarding the network frequency supporting functions are improved.

### BRIEF DESCRIPTION OF DRAWINGS

**FIG 1** shows an electrolysis system according to the invention with electrical network,
**FIG 2** shows the existing DC current control approach and
**FIG 3** shows the extension of the control logic according to the invention.

### DESCRIPTION OF EMBODIMENTS

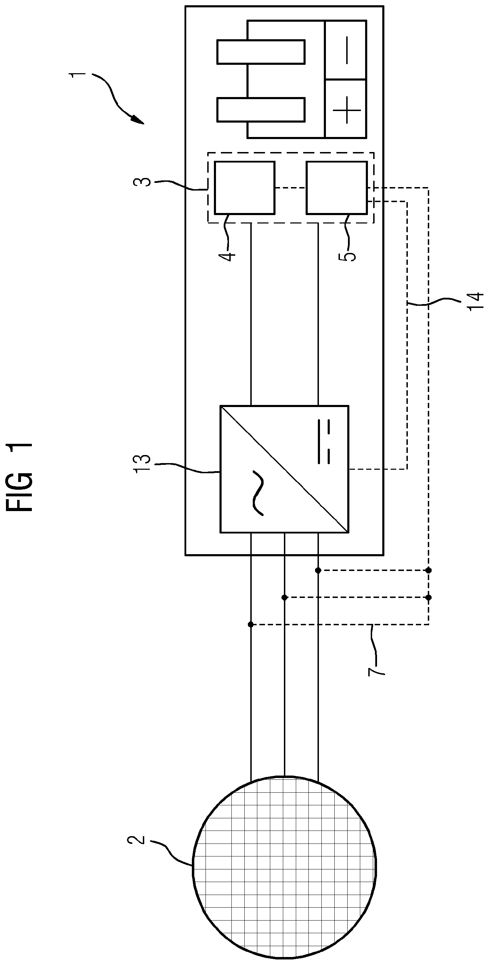

Figure 1 shows a highly simplified electrolysis system 1 according to the invention in an electrical network 2. The electrical network 2 supplies the electrolysis system 1 with electrical energy via AC/DC converter 13 and, according to the invention, the electrolysis system 1 can perform a frequency support function for the electrical network 2 if required. The electrolysis system 1 comprises a control system 3 with an outer loop controller 4 and an inner loop controller 5, a sampling time of the inner loop controller 5 being shorter than a sampling time of the outer loop controller 4. The inner loop controller 5 is connected to the AC/DC converter 13 via a control line 14. According to the invention the inner loop controller 5 is adapted to constantly monitor 7 a rate of change of frequency (RoCoF) in the electrical network 2.

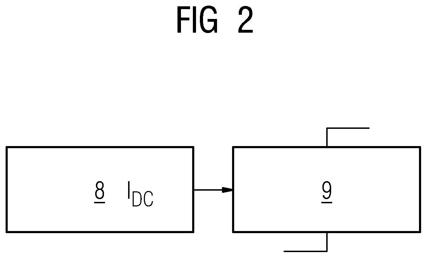

Figure 2 illustrates an existing control of the direct current in an electrolysis system 1, where only ramp rate limits are considered to ensure that the current I_{DC} does not change too quickly. This ensures a smooth and controlled operation, preventing abrupt changes in current that could negatively impact the process (lower efficiency) or the equipment. Figure 2 shows this as a current reference value I_{DC} 8 followed by a rate limiter 9.

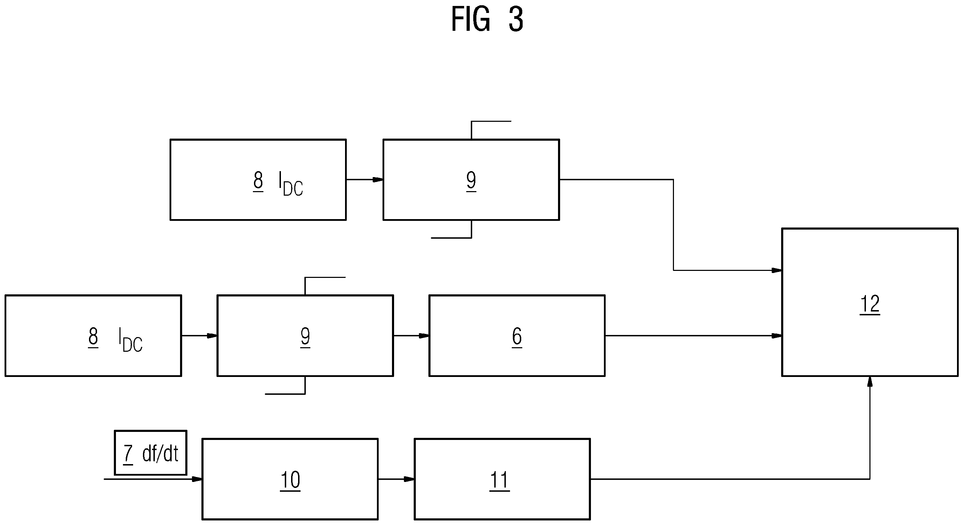

Figure 3 shows the extension of the control shown in Figure 2 according to the invention. In addition to the current reference value 8 and ramp rate limits 9, the control now has a further component, namely a droop control 6. This becomes active when the monitoring of network frequency 7 results in values outside a tolerance band 10 and a network fault has thus been identified (disturbance detection 11). As a result of this measure, the current reference value I_{DC} for the DC current of the electrolysis system 1 is replaced by an adjusted reference value determined with a control override logic 12.

### REFERENCE SIGNS LIST

- 1: electrolysis system
- 2: electrical network
- 3: control system
- 4: outer loop controller
- 5: inner loop controller
- 6: droop control
- 7: frequency monitor, frequency change as function of time df/dt
- 8: current reference value I_{DC}
- 9: rate limiter
- 10: tolerance band
- 11: disturbance detection
- 12: control override logic
- 13: AC/DC converter
- 14: control line

## Claims

1. Method for frequency support by an electrolysis system (1) in an electrical network (2), the electrolysis system (1) comprising a control system (3) with an outer loop controller (4) and an inner loop controller (5), a sampling time of the inner loop controller (5) being shorter than a sampling time of the outer loop controller (6), **characterized in that** a rate of change of frequency (RoCoF) in the electrical network (2) is constantly being monitored by the inner loop controller (5) and if the RoCoF is exceeding or falling below specified limits, a reference DC current value of the electrolysis system (1) that is obtained from the outer loop controller (4) with specified ramp up/down rates, is being redefined as a function of the RoCoF and a specified droop control (6).

2. The method according to claim 1, wherein the inner loop controller (5) is a DC current controller.

3. The method according to claim 2, wherein a sampling time of the inner loop controller (5) is below 300 µs.

4. Electrolysis system (1) with a frequency support function for an electrical network (2) supplying the electrolysis system (1), the electrolysis system (1) comprising a control system (3) with an outer loop controller (4) and an inner loop controller (5), a sampling time of the inner loop controller (5) being shorter than a sampling time of the outer loop controller (4), the inner loop controller (5) being adapted to constantly monitoring a rate of change of frequency (RoCoF) in the electrical network (2) and if the RoCoF is exceeding or falling below specified limits, to obtain a reference DC current value of the electrolysis system (1) from the outer loop controller (4) with specified ramp up/down rates, and to redefine the reference DC current as a function of the RoCoF and a specified droop control (6).

5. Electrolysis system (1) according to claim 4, wherein the inner loop controller (5) is a DC current controller.
